Europäisches Patentamt

European Patent Office

Office européen des brevets

(11) Publication number: **0 300 596 B1**

# EUROPEAN PATENT SPECIFICATION

(45) Date of publication of patent specification: **22.07.92**　(51) Int. Cl.⁵: **F04D 29/22**, B29C 45/14

(21) Application number: **88304171.7**

(22) Date of filing: **09.05.88**

(54) **Water pump impeller.**

(30) Priority: **22.07.87 GB 8717340**

(43) Date of publication of application:
**25.01.89 Bulletin 89/04**

(45) Publication of the grant of the patent:
**22.07.92 Bulletin 92/30**

(84) Designated Contracting States:
**AT BE CH DE ES FR GB GR IT LI LU NL SE**

(56) References cited:
DE-A- 3 307 386　　DE-A- 3 311 793
FR-A- 517 113　　FR-A- 2 462 596
GB-A- 869 049　　LU-A- 67 438

(73) Proprietor: **CONCENTRIC PUMPS LIMITED
Unit 10 Gravelly Industrial Park Tyburn Road
Erdington
Birmingham B24 8HW(GB)**

(72) Inventor: **Child, Robin Edward
Holmby House Eastnor Grove
Leamington Spa Warwickshire CV31
1LD(GB)**

(74) Representative: **Hands, Horace Geoffrey et al
GEORGE FUERY & CO Whitehall Chambers
23 Colmore Row
Birmingham B3 2BL(GB)**

Rank Xerox (UK) Business Services

EP 0 300 596 B1

# Description

This invention relates to impellers for water pumps used in internal combustion engine cooling systems. The industry standard for such impellers has effectively been an iron casting, necessarily having a machined bore usually made as a force-fit on its drive shaft.

As mentioned in the preamble to GB-A-1 386 937 it is known to make water pump impellers of plastics material, for example for washing machines where the water temperature is essentially below 100 degrees C and the rotating speed usually below 3000 rpm, but in an i.c. engine the pump speed may be very much higher and (which is more important) because of the use of a pressurised cooling system, the temperature is also substantially higher. The washing machine pump impeller is found to be unsatisfactory in such i.c. engine situations. The said Patent 1 386 937 provides a solution in which metal is used for a hub which fits onto the drive shaft, and plastics for the vane portion. However, in order to anchor the metal and plastics together, the metal hub has radial projections and because of the manufacturing cost in making the bore of the metal hub of appropriate dimensions to be a drive fit and providing the radial projections, the manufacturing cost for that combination may offer little or any advantage compared with the use of a single casting.

GB-A-869049 discloses arrangements of water pump impellers for an i.c. engine, having a disc and integral impeller vanes, made of rubber or other elastic material, and metal reinforcing rings embedded in a sleeve-like extension disc. In some of the possibilities described in the Patent, the metal ring surrounds the sleeve of said rubber or like material which makes drive engagement with the drive shaft so that the metal is wholly spaced from the shaft.

The object of this invention is to provide a new solution allowing a plastics impeller to be provided with a metal reinforcement which can be accurately positioned therein.

According to the invention a water pump impeller primarily for an i.c. engine cooling system, comprising a moulded component having a disc-like portion provided with drive-vanes and integral with a sleeve-like portion to make drive engagement with the drive shaft for the impeller, and with a metal reinforcing ring embedded in the moulded component surrounding said sleeve-like portion and wholly spaced from the bore of said sleeve-like portion, is characterised in that the moulded component is an injection moulded plastics material, and in that said ring is generally tubular, is of the same axial length as the impeller so that in manufacture it can be located and centered in the die cavity forming the injection moulding with its ends clamped between the respective parts of the forming die, and in that the said ring has castellated ends to allow flow of injected material between the sleeve and the disc.

Preferably the material for the ring is an aluminium alloy made as a die casting and left rough and unmachined, and that for the plastics is a glass filled nylon.

One embodiment of the invention is more particularly described with reference to the accompanying drawings in which:-

Figure 1 is an elevation of an impeller;

Figure 2 is a section taken on the line 2,2 of Figure 1;

Figure 3 is an elevation of the reinforcing ring used in the impeller of Figure 1, on an enlarged scale;

Figure 4 is a sectional elevation of the same taken along the line 4 4 of Figure 3; and

Figure 5 is a sectional plan view taken on the line 5 5 of Figure 3.

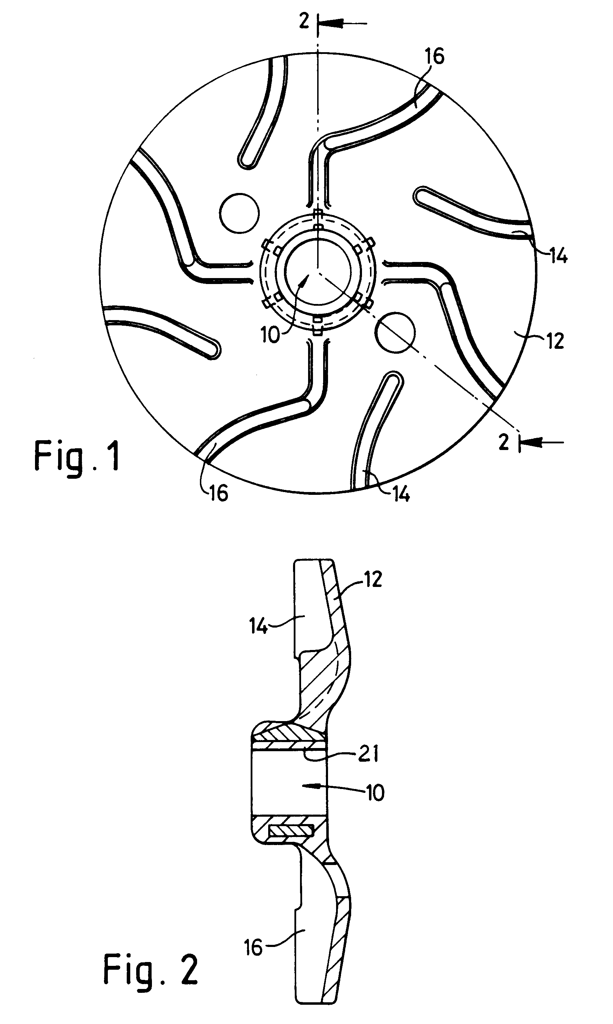

Referring now to the drawings, the impeller has a bore 10 to receive the drive shaft (not shown) and comprises a disc 12, Figure 1, of suitable contour as seen in Figure 2, and provided with four sets of vanes 14,16. The impeller is made as an injection moulding of glass-filled nylon 66.

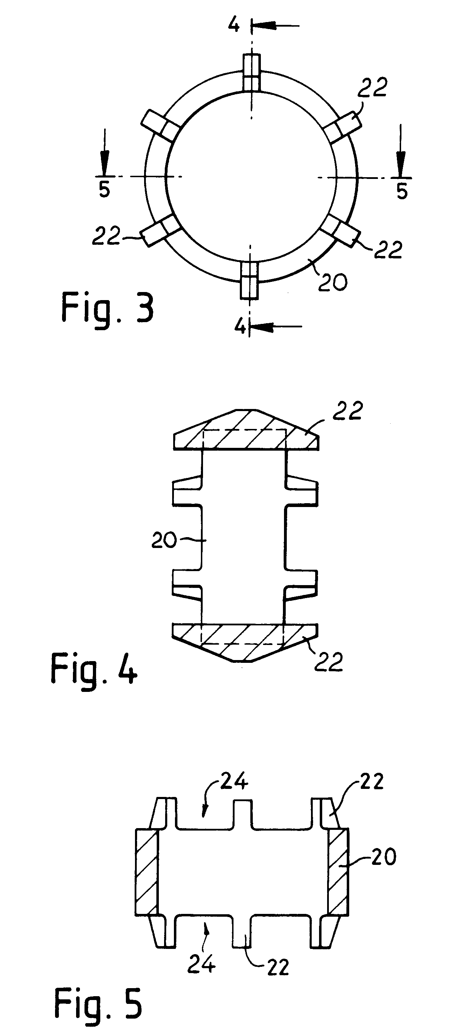

Embedded in the moulding is the insert ring or reinforcement as shown in Figures 3-5. This comprises a short cylindrical tubular portion 20 having a plurality of regularly spaced axially extending external ribs or fins 22 which project beyond the ends of the tube as best seen in Figure 5 and the spaces between those projecting ends form castellations 24.

The insert is a diecasting made of an aluminium alloy, left unfinished, that is un-machined, with its natural surface finish.

The axial length of the ribs is identical to that of the impeller moulding. This enables the insert to be located in the mould cavity and clamped between the parts of the mould, and the said parts may meet at a plane containing the periphery of the disc 10. The insert is thereby fixed in position concentrically of a core plug (part of the die) which forms the bore 10.

The plastics material forming the moulding may be injected at any suitable point (s) and flows through the castellations between the annular space surrounding the core plug and inside the tube 20 to form a sleeve 21, and the space outside the tube 20. When the plastics material has solidified this means that the insert is embedded and keyed to the plastics material, and the bore is formed in the plastics material. The hardness of the plastics material makes it suitable to be force fitted to the drive shaft and provides a wide tolerance in dimensions.

The expansion characteristics of the aluminium and that of the nylon are not greatly dissimilar so that when the plastics at an elevated temperature is injected into the mould containing a relatively cold insert (thereby heating the insert albeit to a lower temperature) and then the plastics cools, a good tight embrace of the metal insert by the plastic moulding is obtained.

## Claims

1. A water pump impeller primarily for an i.c. engine cooling system, comprising a moulded component having a disc-like portion (12) provided with drive-vanes (14, 16) and integral with a sleeve-like portion to make drive engagement with the drive shaft for the impeller, and with a metal reinforcing ring (20, 22) embedded in the moulded component surrounding said sleeve-like portion (21) and wholly spaced from the bore of said sleeve-like portion, characterised in that the moulded component is an injection moulded plastics material, and in that said ring is generally tubular, is of the same axial length as the impeller so that in manufacture it can be located and centered in the die cavity forming the injection moulding with its ends clamped between the respective parts of the forming die, and in that the said ring has castellated ends (22, 24) to allow flow of injected material between the sleeve and the disc.

2. An impeller as claimed in Claim 1 wherein the ring is an unmachined aluminium or aluminium alloy die casting.

3. An impeller as claimed in Claim 1 or Claim 2 wherein the plastics is a glass filled nylon.

4. An impeller as claimed in Claim 2 wherein the ring has a plurality of radial ribs (22) extending along its length.

## Revendications

1. Impulseur de pompe à eau principalement pour un système de refroidissement de moteur à combustion interne, comprenant un élément moulé qui présente une partie en forme de disque (12) équipée d'aillettes d'entraînement (14, 16) et d'un seul tenant avec une partie en forme de manchon pour réaliser un engagement d'entraînement avec l'arbre d'entraînement pour l'impulseur, et avec un anneau de renfort métallique (20, 22) noyé dans l'élément moulé qui entoure ladite partie en forme de manchon (21) et complètement écarté de l'ouverture de ladite partie formant manchon, caractérisé en ce que l'élément moulé est en une matière plastique moulée par injection, et en ce que ledit anneau est de forme générale tubulaire, présente la même longueur axiale que l'impulseur de façon, pour la fabrication, à pouvoir être logé et centré dans la cavité de moule servant à réaliser le moulage par injection en ayant ses extrémités serrées entre les parties respectives du moule, et en ce que ledit anneau présente des extrémités crénelées (22, 24) pour permettre l'écoulement de la matière injectée entre le manchon et le disque.

2. Impulseur selon la revendication 1, dans lequel l'anneau est constitué par une pièce moulée sous pression en aluminium ou alliage d'aluminium non usiné.

3. Impulseur selon la revendication 1 ou la revendication 2, dans lequel la matière plastique est du nylon chargé de verre.

4. Impulseur selon la revendication 2, dans lequel l'anneau présente une série de nervures radiales (22) qui s'étendent sur toute sa longueur.

## Patentansprüche

1. Wasserpumpenlaufrad, insbesondere für das Kühlsystem eines Verbrennungsmotors, enthaltend einen Formteil mit einem scheibenförmigen Abschnitt (12), der mit Antriebsflügeln (14, 16) versehen und einstückig mit einem hülsenartigen Abschnitt ausgebildet ist und auf diese Weise mit der Antriebswelle für das Flügelrad in Eingriff kommt, und der mit einem metallischen Verstärkungsring (20, 22) versehen ist, der den hülsenartigen Abschnitt (21) umgreifend in dem Formteil eingebettet und vollständig mit Abstand gegenüber dem Bohrloch des hülsenartigen Abschnitts angeordnet ist, dadurch gekennzeichnet, daß der gegossene Teil in Spritzgußweise aus Kunststoff gefertigt ist, daß der Ring üblicherweise rohrartig ausgebildet ist, die gleiche axialen Länge wie das Flügelrad aufweist, so daß er bei der Herstellung in dem die Spritzform bildenden Hohlraum angeordnet und zentriert werden kann, wobei seine Enden zwischen den jeweiligen Teilen der Form festgeklemmt sind, und daß der Ring zinnenartig ausgebildete Enden (22, 24) aufweist, damit Spritzmaterial zwischen die Hülse und die Scheibe fließen kann.

2.  Laufrad nach Anspruch 1, wobei der Ring ein unbearbeitetes Formteil aus Aluminium oder einer Aluminiumlegierung ist.

3.  Laufrad nach Anspruch 1 oder Anspruch 2, wobei der Kunststoff durch Nylon mit Glasfüllung gebildet wird.

4.  Laufrad nach Anspruch 2, wobei der Ring eine Anzahl von radialen Rippen (22) aufweist, die sich über seine Länge erstrecken.

Fig. 1

Fig. 2

Fig. 3

Fig. 4

Fig. 5